# EUROPÄISCHE PATENTSCHRIFT

(11) **EP 3 453 930 B1**
(45) Veröffentlichungstag und Bekanntmachung des Hinweises auf die Patenterteilung: **19.02.2020**
(21) Anmeldenummer: 17189960.2
(22) Anmeldetag: 07.09.2017
(51) Int. Cl.: F16K 31/06

(54) **VENTIL ZUR REGELUNG EINES FLUIDS**
VALVE FOR CONTROLLING A FLUID
VANNE DE RÉGLAGE D'UN FLUIDE

(43) Veröffentlichungstag der Anmeldung: 13.03.2019
(73) Patentinhaber: MSG Mechatronic Systems GmbH, 8551 Wies (AT)
(72) Erfinder: Lampl, Ewald, 8551 Wies (AT); Gasser, Hans-Jörg, 8552 Eibiswald (AT)
(74) Vertreter: Margotti, Herwig Franz

(56) Entgegenhaltungen:
- DE-U1-202010 004 556
- GB-A- 2 089 478
- JP-A- S59 137 682
- US-A- 3 016 920

## Beschreibung

Die Erfindung betriff ein Ventil zur Regelung eines Fluids mit den Merkmalen des Oberbegriffs des Anspruchs 1.

Das Gebrauchsmuster DE 20 2010 004 556 U1 offenbart ein Ventil zur Regelung eines Fluids, welches ein Gehäuse mit einem rohrförmigen Hohlraum, an welchem drei Anschlüsse anschließen, umfasst. In dem rohrförmigen Hohlraum ist ein zylinderförmiger Verschluss angeordnet, welcher mehrere Nuten aufweist und zwischen einer ersten Stellung und einer zweiten Stellung verlagerbar ist. In der ersten Stellung des Verschlusses stellt sich ein Strömungspfad zwischen zwei der drei Anschlüsse ein und in der zweiten Stellung stellt sich ein Strömungspfad zwischen anderen zwei der drei Anschlüsse ein, wobei jeweils eine Strömung von Fluid zu dem übrigen dritten Anschluss unterbunden ist. Ferner weist das Ventil eine Betätigungseinheit auf, welche eine stationäre Spule mit Gehäuse und einen beweglichen Anker umfasst. Der Anker ist flach ausgebildet, mit dem Verschluss gekoppelt und ist stirnseitig zu der Spule in dem Hohlraum angeordnet, wobei der Anker von dem Fluid umspült wird. Der Anker verlagert den Verschluss in Abhängigkeit von einem an die Spule angelegten Strom zwischen der ersten und der zweiten Stellung.

Als nachteilig bei dem bekannten Ventil hat sich erwiesen, dass die auf den Anker wirkende Magnetkraft exponentiell mit dem Abstand vom stationären Teil des Elektromagneten abnimmt und daher nur ein verhältnismäßig geringer Hub realisiert werden kann.

Weitere Ventile werden aus GB 2 089 478 A, JP S59 137682 A und US 3 016 920 A bekannt.

Es sind Ventile bekannt, welche eine dynamische Dichtung zur Trennung des Antriebsraumes vom Fluidraum verwenden. Nachteilig dabei ist eine geringere Verschleißfestigkeit dynamischer gegenüber statischer Dichtungen. Statische Dichtung bedeutet, dass kein mit der Dichtung in mechanischem Kontakt stehender Teil in Bezug auf die Dichtung bewegt wird. Bei einer dynamischen Dichtung gleitet ein bewegliches Teil an der Dichtung. Bei einer anderen Art von Ventilen wird der Anker von der Spule durch ein dünnes Kernführungsrohr getrennt. Das Kernführungsrohr hat dabei die Aufgabe den Fluidraum vom Spulenraum zu trennen, sodass die Spule nicht durch aggressives Fluid geschädigt werden kann. Die dabei auftretenden kleinen Spalte führen bei Verschmutzungen im Fluid zur Gefahr der Blockade des Ankers.

Bei dem aus dem Gebrauchsmuster DE 20 2010 004 556 U1 bekannten Ventil ist weder aus den Zeichnungen ersichtlich, noch in der Beschreibung erwähnt, dass die Spule gegen direkten Kontakt mit dem Fluid geschützt ist. Ein unmittelbarer Kontakt zwischen dem Fluid und der Spule kann zu einer Materialschwächung einer den Draht der Spule umgebenden Isolierschicht und infolgedessen zu einem Kurzschluss in der Spule führen, vor allem, wenn es sich bei dem Fluid um ein ätzendes oder aggressives Fluid handelt.

Es ist somit die Aufgabe der vorliegenden Erfindung ein Ventil bereitzustellen, welches die Nachteile des Standes der Technik überwindet, einfach aufgebaut ist und eine lange Lebensdauer aufweist.

Die genannte Aufgabe wird erfindungsgemäß durch eine Vorrichtung mit den Merkmalen des kennzeichnenden Teils des Anspruchs 1 gelöst. Bevorzugte Ausgestaltungen der Erfindung sind Gegenstand der abhängigen Ansprüche.

Bei dem erfindungsgemäßen Ventil ist die Spule außerhalb eines Hohlraums, welcher in einem Gehäuse des Ventils ausgebildet ist und bei zum Ventil zugeführten Fluid zumindest teilweise mit Fluid gefüllt wird, gegenüber dem Hohlraum statisch abgedichtet an das Gehäuse des Ventils angeschlossen. Durch eine Anordnung der Spule außerhalb des Hohlraums gegenüber dem Hohlraum statisch abgedichtet kommt die Spule nicht mit dem Fluid in Kontakt. Infolgedessen weist die Spule eine sehr lange Lebensdauer auf.

Ferner ist bei dem erfindungsgemäßen Ventil der Anker im Wesentlichen scheibenförmig ausgebildet, wobei der Anker an einer der Spule bzw. dem Kern zugewandten Seite eine ringförmige Erhebung aufweist. Im Wesentlichen scheibenförmig bedeutet in diesem Zusammenhang, dass die Form des Ankers geringfügig von der Form einer Scheibe abweichen kann. Eine Mantelinnfläche der Erhebung und/oder eine Mantelaußenfläche des Ankers ist/sind in Richtung der Spule vorzugsweise konusförmig ausgebildet. Als Mantelaußenfläche kann in diesem Zusammenhang sowohl eine Mantelaußenfläche des scheibenförmigen Teils des Ankers, als auch eine Mantelaußenfläche der ringförmigen Erhebung oder eine Mantelaußenfläche, welche sich über den scheibenförmigen Teil des Ankers und die ringförmige Erhebung zieht, gesehen werden. Infolgedessen ändert sich bei dem erfindungsgemäßen Ventil die auf den Anker durch ein Magnetfeld der Spule wirkende Kraft, mit welcher der Anker den zumindest einen Verschluss von der zweiten Stellung in die erste Stellung und/oder von der ersten Stellung in die zweite Stellung verlagert, im Hubbereich nur wenig, was einen größeren Hubbereich ermöglicht.

Durch die Ausbildung eines Konus am Anker und am Polkern wird der Kraftverlauf über dem Hub beeinflusst und kann so eingestellt werden, dass keine übermäßigen Kräfte auftreten. Im Gegensatz dazu tritt bei flachem Anker und Polkern, wie z.B. in der DE202010004556U1 realisiert, bei geringem Abstand eine unerwünscht große Kraft auf, welche dann mit zunehmendem Abstand exponentiell abfällt. Durch die erfindungsgemäße Maßnahme des Vorsehens zumindest eines Konus kann über den Konuswinkel (der die Steigung des Konus definiert) bei gleicher Bestromung und Magnetauslegung der Kraftverlauf bei Abstandsänderung eingestellt werden. Beim erfindungsgemäßen Ventil mit Ausbildung der Spule als Schaltmagnet wird der Kraftverlauf so eingestellt, dass sich im Zusammenspiel mit der Feder ein nahezu konstanter Kraftverlauf einstellt. Beim erfindungsgemäßen Ventil mit Ausbildung der Spule als Proportionalmagnet (Einstellung einer bestimmten Position in Abhängigkeit von der Stromstärke) wird der Kraftverlauf fallend eingestellt, d.h. die Kraft nimmt mit zunehmendem Abstand sogar zu.

Durch Veränderung der Steigung des Konus ergibt sich weiterhin der Vorteil, dass bei dem erfindungsgemäßen Ventil auch bei konstant an die Spule anliegendem Strom der Kraftverlauf, der auf den Anker wirkt, über einen Weg, den der Anker von der ersten Stellung in die zweite Stellung und/oder umgekehrt zurücklegt, in Abhängigkeit vom jeweiligen Abstand veränderbar ist. Beispielsweise lässt sich über einen entsprechenden Steigungsverlauf des Konus ein progressiver Kraftverlauf einstellen

Zweckmäßig weist die Betätigungseinheit einen Kern auf, welcher innerhalb der Spule angeordnet ist. Ein dem Anker zugewandtes Ende des Kerns weist vorzugsweise einen Konus auf, wobei durch eine Veränderung einer Steigung des Konus zusätzlich die Kraft veränderbar ist, mit welcher der Anker den zumindest einen Verschluss von der zweiten Stellung in die erste Stellung und/oder von der ersten Stellung in die zweite Stellung verlagert.

Vorteilhaft ist durch eine Geometrie der zumindest einen Durchflussöffnung in Abhängigkeit von der Geometrie des zumindest einen Verschlusses eine Durchflussmenge durch die zumindest eine Durchflussöffnung und die Betätigungskraft veränderbar, welche aufgewendet werden muss, um den Verschluss von der zweiten Stellung in die erste Stellung und/oder von der ersten Stellung in die zweite Stellung zu verlagern. In diesem Zusammenhang kann die Durchflussöffnung zum Beispiel einen sich verändernden Querschnitt aufweisen oder oval ausgebildet sein, wobei der Verschluss entsprechend an die Form der Durchflussöffnung angepasst ist.

Der Verschluss ist vorteilhaft flach ausgebildet und eine Dichtfläche einer Durchflussöffnung des Ventils, welche der Verschluss in der zweiten Stellung verschließt, ist ebenso flach ausgebildet. Es besteht aber auch die Möglichkeit, dass der Verschluss zylinderförmig ausgebildet ist und Ausnehmungen aufweist, um je nach Stellung des Verschlusses verschiedene Strömungspfade zu verschließen oder freizugeben. Ferner besteht auch die Möglichkeit, dass das Ventil eine beliebige andere, dem Fachmann bekannte Form aufweist.

Erfindungsgemäß ist der zumindest eine Verschluss durch zumindest einen Stopfen gebildet ist, wobei der Anker den zumindest einen Verschluss in Abhängigkeit von dem an die Spule angelegten Strom zwischen der ersten Stellung und der zweiten Stellung im Wesentlichen in Richtung bzw. entgegen dem Strömungspfad verlagert. Hierdurch ist der Vorteil erhalten, dass das Ventil bestmöglich an einen Einsatzzweck und sich daraus ergebende Anforderungen angepasst und ausgelegt werden kann.

Das erfindungsgemäße Ventil weist zwei Stopfen und ihnen zugeordnete Durchflussöffnungen auf, wobei die Stopfen beabstandet zueinander durch eine Achse gehalten sind, die in dem Gehäuse verschiebbar gelagert ist und an einem ihrer Enden mit dem Anker fest verbunden ist. Ein erster der zwei Stopfen ist in Richtung des Strömungspfads vor einer ersten der Durchflussöffnungen angeordnet und ein zweiter der zwei Stopfen ist in Richtung des Strömungspfads nach einer zweiten der Durchflussöffnungen angeordnet. Hierdurch ist der Vorteil erhalten, dass eine Kraft zum Bewegen der Stopfen von der ersten Stellung in die zweite Stellung und/oder umgekehrt minimal ist.

Alle Ausführungsbeispiele und Abbildungen bei denen der Verschluss nicht als Stopfen ausgeführt ist dienen der Anschauung und/oder als Beispiel des Stands der Technik und nicht als Beschreibung der Erfindung wie sie durch die angehängten Ansprüche definiert wird.

Vorteilhaft weist das erfindungsgemäße Ventil zumindest eine Feder auf, welche an dem Gehäuse abstützend den zumindest einen Verschluss mit einer Federkraft in die erste Stellung vorspannt, wobei der Anker bei an die Spule angelegtem Strom den zumindest einen Verschluss entgegen der Federkraft von der ersten Stellung in Richtung der zweiten Stellung bewegt. So ein Ventil ist insbesondere für den Einsatz in Kühlmittelkreisläufen geeignet, da die Feder das Ventil offenhält und dadurch stets eine Kühlung zum Beispiel des Verbrennungsmotors eines Kraftfahrzeugs gewährleistet ist. Wird die Kühlung nicht benötigt, beispielsweise aufgrund von sehr geringen Außentemperaturen, wird durch Bestromen der Spule der Verschluss entgehen der Federkraft von der ersten Stellung in die zweite Stellung verlagert, wodurch das Ventil geschlossen wird.

Bevorzugt ist der zumindest eine Verschluss durch den Anker in Abhängigkeit von dem an die Spule angelegten Strom in eine Zwischenstellung verlagerbar, wodurch ein Durchfluss durch die zumindest eine Durchflussöffnung veränderbar ist. So ein erfindungsgemäßes Ventil kann beispielsweise als Proportionalventil eingesetzt werden, um zum Beispiel einen Kühlmitteldurchlauf in einem Kraftfahrzeug zum Kühlen eines Verbrennungsmotors bedarfsgerecht steuern zu können.

Zweckmäßig ist an dem zumindest einen Verschluss ein Permanentmagnet und in dem Hohlraum ein Magnetfeldsensor ausgebildet, der eine Position des zumindest einen Verschlusses erfasst. Dies ist vor allem bei erfindungsgemäßen Ventilen vorteilhaft, bei denen der Anker in Abhängigkeit von dem an die Spule angelegten Strom in eine Zwischenstellung verlagerbar ist, da dadurch immer genau festgestellt werden kann, in welcher Stellung sich der Anker befindet.

Vorteilhaft ist der zumindest eine Verschluss durch eine Achse gehalten, welche in dem Gehäuse verschiebbar gelagert ist und an einem Ende mit dem Anker fest verbunden ist. Bevorzugt ist die Achse durch zwei beabstandete Lager im Gehäuse und im Kern verschiebbar gelagert. Das hat den Vorteil, dass ein Verkannten der Achse beim Bewegen des Verschlusses von der ersten Stellung in die zweite Stellung vermieden werden kann.

Das erfindungsgemäße Ventil kann beispielsweise zur Regelung eines Fluids gebildet durch Wasser, Kühlmittelflüssigkeit, Öl, Flüssigkeiten aus der Lebensmittelindustrie etc. herangezogen werden.

Vorteilhafte Ausgestaltungen der erfindungsgemäßen Vorrichtung werden in weiterer Folge anhand der Figuren näher erläutert.
Figuren 1 und 2 zeigen eine erste Ausführungsvariante eines erfindungsgemäßen Ventils in einer seitlichen Schnittansicht bei unbestromter und bestromter Spule.
Figuren 3 und 4 zeigen eine weitere Ausführungsvariante des erfindungsgemäßen Ventils in einer seitlichen Schnittansicht bei unbestromter und bestromter Spule.
Figuren 5 und 6 zeigen eine weitere Ausführungsvariante des erfindungsgemäßen Ventils in einer seitlichen Schnittansicht bei unbestromter und bestromter Spule.
Figuren 7 und 8 zeigen eine weitere Ausführungsvariante des erfindungsgemäßen Ventils in einer seitlichen Schnittansicht bei unbestromter und bestromter Spule.

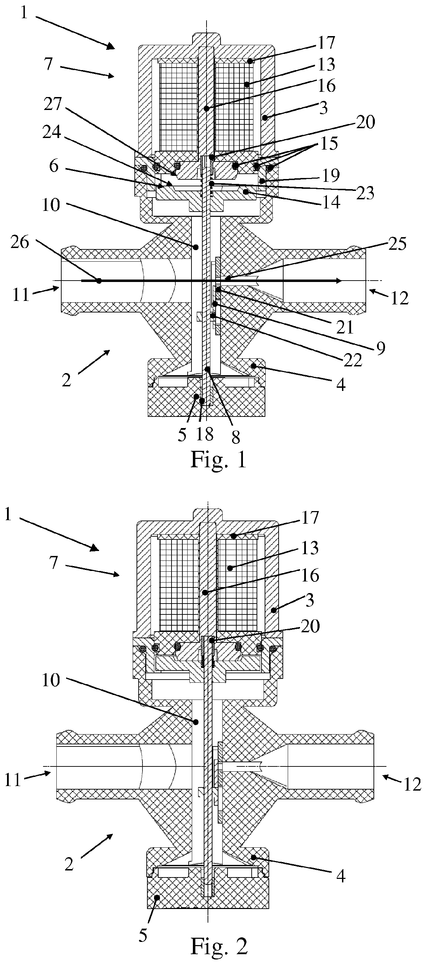

Figuren 1 und 2 zeigen eine erste Ausführungsvariante eines erfindungsgemäßen Ventils 1 zur Regelung eines Fluids in einer seitlichen Schnittansicht. Das Ventil 1 umfasst ein Gehäuse 2 und eine Betätigungseinheit 7. Die Betätigungseinheit 7 umfasst ein an das Gehäuse 2 über einen Flansch 19 anschließendes Spulengehäuse 3, eine in dem Spulengehäuse 3 angeordnete Spule 13, einen Spulenkörper 17, einen Kern 16, eine Gleithülse 20 und einen Anker 14. Die Spule 13 ist durch den Spulenkörper 17 eingefasst und kann über nicht dargestellte Kabel mit einer Stromquelle verbunden werden. Die Spule 13 umschließt den Kern 16, welcher mit dem Spulengehäuse 3 verbunden ist.
Der Anker 14 ist scheibenförmig ausgebildet und weist eine ringförmige Erhebung 6 auf, wobei an der ringförmigen Erhebung 6 an ihrer Mantelinnenfläche 24 ein Konus ausgebildet ist.

Der Kern 16 weist an einem dem Anker 14 zugwandten Ende einen Konus 27 auf.

Zwischen dem Gehäuse 2, dem Flansch 19 und dem Kern 16 sind O-Ringe 15 angeordnet, welche die Spule 13 gegenüber einem in dem Gehäuse 2 ausgebildeten Hohlraum 10 statisch abdichten. Hierdurch ist der Vorteil erhalten, dass die Spule 13 nicht mit einem durch das Ventil 1 geleiteten Fluid in Kontakt kommt.

Das Gehäuse 2 besteht aus einem ersten Gehäuseelement 4 und einem zweiten Gehäuseelement 5. An dem ersten Gehäuseelemente 4 sind ein Zufluss 11 und ein Abfluss 12 ausgebildet, die einander gegenüberliegen und jeweils in den Hohlraum 10 münden. Bei der Mündung des Abflusses 12 in den Hohlraum 10 ist ein Dichtsitz 21 ausgebildet, welcher eine Durchflussöffnung 25 aufweist.

In dem Hohlraum 10 ist eine Achse 8 angeordnet, welche in einer in dem zweiten Gehäuseelement 5 ausgebildeten Gleithülse 18 und der Gleithülse 20, welche im Kern 16 ausgebildet ist, verschieblich gelagert ist und mit dem Anker 14 fest verbunden ist.

An der Achse 8 ist ein Verschluss 9 ausgebildet, welcher Verschluss 9 über einen Mitnehmer 22 mit der Achse 8 verbunden ist und durch einen Schieber gebildet ist.

Zwischen dem Anker 14 und der Gleithülse 20 ist eine Feder 23 ausgebildet.

In unbestromtem Zustand der Spule 13 spannt die Feder 23 die Achse 8 und somit den Verschluss 9 in eine erste Stellung vor. In der ersten Stellung gibt der Verschluss 9 die Durchflussöffnung 25 frei, wodurch sich ein Strömungspfad 26 durch das Ventil 1 einstellt, entlang welchem ein durch den Zufluss 11 dem Ventil 1 zugeführtes Fluid strömen kann. Siehe Figur 1. Wie aus den Figuren 1 und 2 ersichtlich umströmt das Fluid den Anker 14.

In bestromtem Zustand der Spule 13 zieht die Spule 13 den Anker 14 entgegen der Federkraft der Feder 23 an und bewegt die Achse 8 und somit den Verschluss 9 von der ersten Stellung in eine zweite Stellung. In der zweiten Stellung wird die Durchflussöffnung 25 durch den Verschluss 9 verschlossen, wodurch der Strömungspfad 25 durch das Ventil 1 unterbrochen ist. Siehe Figur 2. Vorteilhaft ist der Mitnehmer 22 so ausgebildet, dass der Verschluss gegenüber der Achse 8 leicht verschiebbar ist, wodurch der Verschluss 9 in der zweiten Stellung durch ein durch den Zufluss 11 zum Ventil 1 zugeführtes Fluid gegen den Dichtsitz 21 gepresst wird und somit die Durchflussöffnung 25 dichtend abgeschlossen wird.

Es sei hier noch angemerkt, dass in Abhängigkeit von dem an die Spule 13 angelegten Strom und der Ausgestaltung des Konus der Verschluss 9 auch in Zwischenstellungen zwischen erster Stellung und zweiter Stellung verlagerbar ist, wodurch ein Durchfluss durch die Durchflussöffnung 25 verändert werden kann.

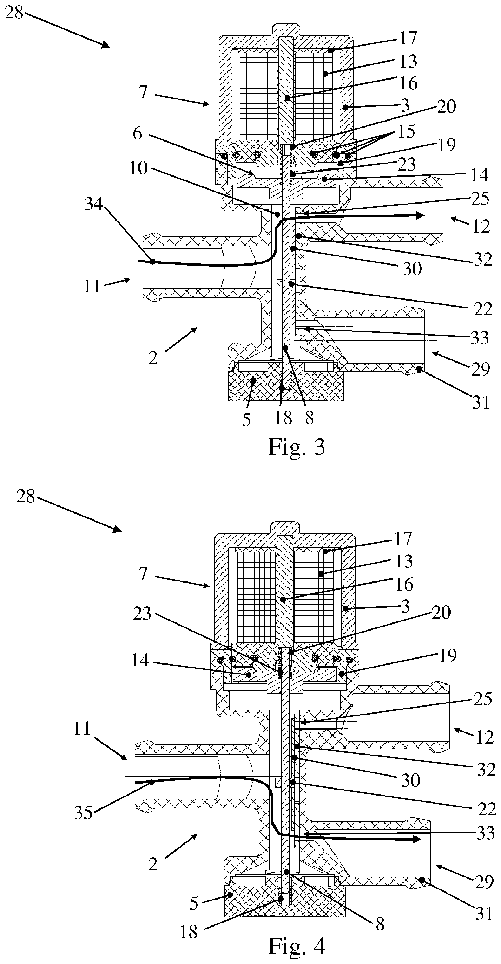

Figuren 3 und 4 zeigen eine weitere Ausführungsvariante des erfindungsgemäßen Ventils 28 zur Regelung eines Fluids in einer seitlichen Schnittansicht. Das Ventil 28 unterscheidet sich zum Ventil 1 gemäß den Figuren 1 und 2 dahingehend, dass das Ventil 28 ein Gehäuse 2 mit einem einen zweiten Abfluss 29 aufweisenden ersten Gehäuseelement 31 aufweist, wodurch sich die Form des Gehäuseelements 31 des Gehäuses 2 des Ventils 28 zu der Form des Gehäuseelements 4 des Gehäuses 2 des Ventils 1 gemäß den Figuren 1 und 2 unterscheidet. Elemente, die bei dem Ventil 28 gleich sind wie bei dem Ventil 1 gemäß den Figuren 1 und 2 sind mit gleichen Bezugszeichen versehen. Im Bereich der Mündung des Abflusses 12 - welcher in weiterer Folge als erster Abfluss 12 bezeichnet wird - und des zweiten Abflusses 29 in den Hohlraum 10 ist ein Dichtsitz 32 ausgebildet, welcher jeweils pro Abfluss 12 und 29 eine Durchflussöffnung 25 bzw. 33 aufweist.

In unbestromtem Zustand der Spule 13 drückt die Feder 23 die Achse 8 und somit den Verschluss 30 in eine erste Stellung. In der ersten Stellung gibt der Verschluss 30 die Durchflussöffnung 25 frei und verschließt die Durchflussöffnung 33, wodurch sich ein erster Strömungspfad 34 durch das Ventil 28 einstellt, entlang welchem ein durch den Zufluss 11 dem Ventil 28 zugeführtes Fluid zum ersten Abfluss 12 strömen kann. Siehe Figur 3.

In bestromtem Zustand der Spule 13 zieht die Spule 13 den Anker 14 entgegen der Federkraft der Feder 23 an und bewegt die Achse 8 und somit den Verschluss 30 von der ersten Stellung in eine zweite Stellung. In der zweiten Stellung gibt der Verschluss 30 die Durchflussöffnung 33 frei und verschließt die Durchflussöffnung 25, wodurch sich ein zweiter Strömungspfad 35 durch das Ventil 28 einstellt, entlang welchem ein durch den Zufluss 11 dem Ventil 28 zugeführtes Fluid zum zweiten Abfluss 29 strömen kann. Siehe Figur 4.

Es sei hier noch angemerkt, dass in Abhängigkeit des an die Spule 13 angelegten Stroms der Verschluss 30 auch in Zwischenstellungen verlagerbar ist, wobei in der Zwischenstellung sowohl die Durchflussöffnung 25, als auch die Durchflussöffnung 33 durch den Verschluss 30 je nach Ausgestaltung teilweise oder ganz freigegeben ist.

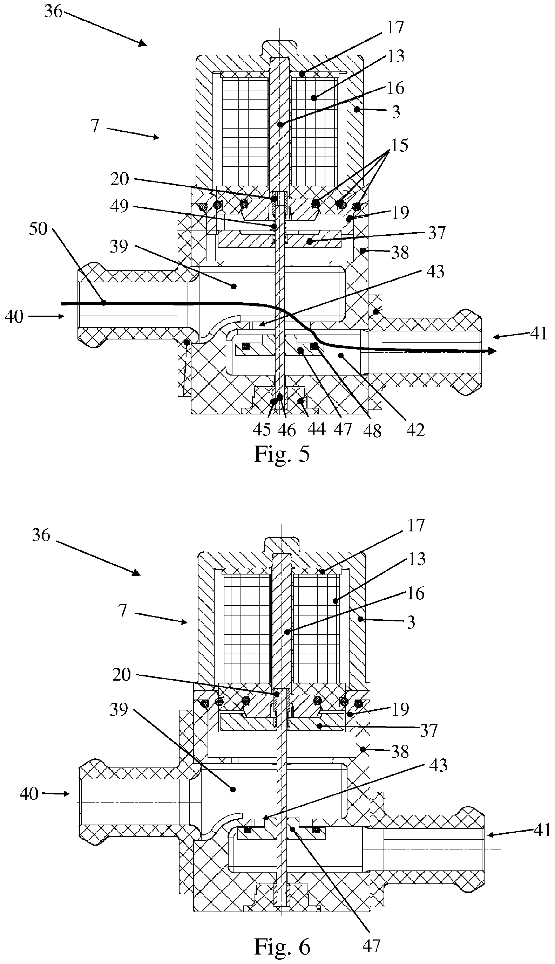

Figuren 5 und 6 zeigen eine weitere Ausführungsvariante des erfindungsgemäßen Ventils 36 zur Regelung eines Fluids in einer seitlichen Schnittansicht. Das Ventil 36 umfasst eine Betätigungseinheit 7, die bis auf den Anker 37 gleich aufgebaut ist wie die Betätigungseinheit 7 des zu Figur 1 und Figur 2 beschriebenen Ventils 1. Der Anker 37 unterscheidet sich zu dem Anker 14 des Ventils 1 gemäß Figur 1 geringfügig in seiner Form.

Das Ventil 36 umfasst ein Gehäuse 38, welches mit der Betätigungseinheit 7 verbunden ist und einen Hohlraum 39 aufweist, in welchem der Anker 37 angeordnet ist. An das Gehäuse 38 schließen ein Zufluss 40 und ein Abfluss 41 an, wobei der Zufluss 40 direkt in den Hohlraum 39 mündet und der Abfluss 41 über einen Kanal 42 und eine einen Ventilsitz bildende Durchflussöffnung 43 an dem Hohlraum 39 anschließt.

In dem Gehäuse ist ein Lager 44 mit einer Gleithülse 45 ausgebildet. In der Gleithülse 45 und der Gleithülse 20 ist eine Achse 46 verschiebbar gelagert. Die Achse 46 ist an einem ihrer Enden mit dem Anker 37 verbunden. Zwischen der Hülse 20 und dem Anker 37 ist eine Feder 49 ausgebildet.

An der Achse 46 ist ein Verschluss 47 ausgebildet, welcher durch einen Stopfen gebildet ist und einen O-Ring 48 aufweist.

In unbestromtem Zustand der Spule 13 drückt die Feder 49 die Achse 46 und somit den Verschluss 47 in eine erste Stellung. In der ersten Stellung gibt der Verschluss 47 die Durchflussöffnung 43 frei, wodurch sich ein erster Strömungspfad 50 durch das Ventil 36 einstellt, entlang welchem ein durch den Zufluss 40 dem Ventil 36 zugeführtes Fluid zum Abfluss 41 strömen kann. Siehe Figur 5.

In bestromtem Zustand der Spule 13 zieht die Spule 13 den Anker 37 entgegen der Federkraft der Feder 49 an und bewegt die Achse 46 und somit den Verschluss 47 von der ersten Stellung in eine zweite Stellung. In der zweiten Stellung gibt der Verschluss 47 die Durchflussöffnung 43 frei und verschließt die Durchflussöffnung 43, wodurch der Strömungspfad 50 unterbrochen wird. Siehe Figur 6.

Bei dem Ventil 36 wird der Verschluss 47 von der ersten Stellung in die zweite Stellung im Wesentlichen entgegen und von der zweiten Stellung in die erste Stellung im Wesentlichen in Richtung dem Strömungspfad verlagert.

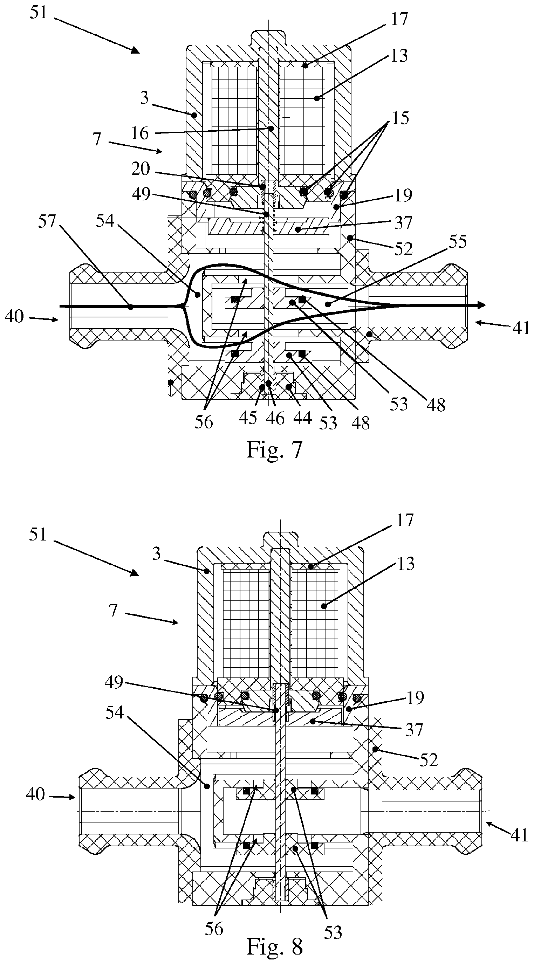

Figuren 7 und 8 zeigen eine weitere Ausführungsvariante des erfindungsgemäßen Ventils 51 zur Regelung eines Fluids in einer seitlichen Schnittansicht. Das Ventil 51 unterscheidet sich zum Ventil 36 gemäß den Figuren 5 und 6 dahingehend, dass bei dem Ventil 51 das Gehäuse 52 derart ausgebildet ist, dass der Zufluss 40 und der Abfluss 41 einander gegenüberliegen. Ferner unterscheidet sich das Gehäuse 52 durch seinen inneren Aufbau gegenüber dem Gehäuse 38 des Ventils 36 gemäß den Figuren 5 und 6. Elemente, die bei dem Ventil 51 gleich den Elementen des Ventils 36 gemäß der Figuren 5 und 6 sind, sind mit gleichen Bezugszeichen gekennzeichnet.

Das Ventil 51 weist zwei Verschlüsse 53 auf. Das Gehäuse 52 weist einen Hohlraum 54 auf, in welchen der Zufluss 40 mündet. Der Abfluss mündet über einen Kanal 55 und zwei jeweils einen Ventilsitz bildende Durchflussöffnungen 56 in den Hohlraum 54.

In unbestromtem Zustand der Spule 13 drückt die Feder 49 die Achse 46 und somit die Verschlüsse 53 in eine erste Stellung. In der ersten Stellung geben die Verschlüsse 53 jeweils die Durchflussöffnungen 56 frei, wodurch sich ein erster Strömungspfad 57 durch das Ventil 51 einstellt, entlang welchem ein durch den Zufluss 40 dem Ventil 51 zugeführtes Fluid zum Abfluss 41 strömen kann. Siehe Figur 7.

In bestromtem Zustand der Spule 13 zieht die Spule 13 den Anker 37 entgegen der Federkraft der Feder 49 an und bewegt die Achse 46 und somit die Verschlüsse 53 von der ersten Stellung in eine zweite Stellung. In der zweiten Stellung verschließen die Verschlüsse 53 die Durchflussöffnungen 56, wodurch der Strömungspfad 57 unterbrochen wird. Siehe Figur 8.

Bei dem Ventil 36 wird bei einer Verlagerung der Verschlüsse 53 von der ersten Stellung in die zweite Stellung bzw. umgekehrt einer der Verschlüsse 53 in Richtung des Strömungspfads und der andere der Verschlüsse 53 entgegen des Strömungspfads verlagert. Hierdurch ist der Vorteil erhalten, dass eine Kraft zum Bewegen der Verschlüsse 53 minimal ist, da diese im Wesentliche nur so groß sein muss, um entgegen der Federkraft zu wirken.

## Patentansprüche

1. Ventil (1; 28; 36; 51) zur Regelung eines Fluids, umfassend
ein Gehäuse (2; 38; 52) mit einem zumindest eine Durchflussöffnung (25; 33; 43; 56) aufweisenden Hohlraum (10; 39; 54), an welchen zumindest ein Zufluss (11; 40) und zumindest ein Abfluss (12; 29; 41) anschließt,
zumindest einen Verschluss (9; 30; 47; 53), welcher zwischen einer ersten Stellung und einer zweiten Stellung verlagerbar ist, wobei sich in der ersten Stellung ein Strömungspfad (26; 34, 35; 50; 57) vom zumindest einen Zufluss (11; 40) über die zumindest eine Durchflussöffnung (25; 33; 43; 56) durch den Hohlraum (10; 39; 54) zum zumindest einen Abfluss (12; 29; 41) einstellt und wobei in der zweiten Stellung der zumindest eine Verschluss (9; 30; 47; 53) die zumindest eine Durchflussöffnung (25; 33; 43; 56) verschließt, wodurch der Strömungspfad (26; 34, 35; 50; 57) unterbrochen ist, und
eine Betätigungseinheit (7), welche eine Spule (13), ein Spulengehäuse (3), einen von der Spule zumindest teilweise umschlossenen Kern (16) und einen Anker (14; 37) aufweist, welcher Anker (14; 37) mit dem zumindest einen Verschluss (9; 30; 47; 53) gekoppelt ist und stirnseitig zum Kern (16) in dem Hohlraum (10; 39; 54) angeordnet ist, wobei durch den Hohlraum (10; 39; 54) strömendes Fluid den Anker (14; 37) umströmt und wobei der Anker (14; 37) den zumindest einen Verschluss (9; 30; 47; 53) in Abhängigkeit von einem an die Spule (13) angelegten Strom zwischen der ersten Stellung und der zweiten Stellung verlagert, wobei
die Spule (13) außerhalb des Hohlraums (10; 39; 54) angeordnet und gegenüber dem Hohlraum (10; 39; 54) statisch abgedichtet an das Gehäuse (2; 38; 52) anschließt und wobei der Anker (14; 37) im Wesentlichen scheibenförmig ausgebildet ist, wobei der Anker (14; 37) an einer dem Kern (16) zugewandten Seite eine ringförmige Erhebung (6) aufweist, wobei eine Mantelinnenfläche (24) der Erhebung (6) und/oder eine Mantelaußenfläche des Ankers (14; 37) konusförmig ausgebildet ist, wobei über einen an die Spule (13) angelegten Strom eine Kraft auf den Anker (14; 37) veränderbar ist, mit welcher der Anker (14; 37) den zumindest einen Verschluss (9; 30; 47; 53) von der zweiten Stellung in die erste Stellung und/oder von der ersten Stellung in die zweite Stellung verlagert, wobei ein Kraftverlauf der Kraft in Abhängigkeit eines Abstandes zwischen Anker (14; 37) und dem Kern (16) über eine Steigung des Konus/der Konusse beeinflussbar ist, wobei der zumindest eine Verschluss (47; 53) durch zumindest einen Stopfen gebildet ist, wobei der Anker (37) den zumindest einen Verschluss (47; 53) in Abhängigkeit von dem an die Spule (13) angelegten Strom zwischen der ersten Stellung und der zweiten Stellung im Wesentlichen in Richtung bzw. entgegen dem Strömungspfad (50; 57) verlagert, **dadurch gekennzeichnet, dass** das Ventil (51) zwei Stopfen (53) und ihnen zugeordnete Durchflussöffnungen (56) aufweist, wobei die Stopfen (53) beabstandet zueinander durch eine Achse (46) gehalten sind, die in dem Gehäuse (52) verschiebbar gelagert ist und an einem ihrer Enden mit dem Anker (37) fest verbunden ist, wobei ein erster der zwei Stopfen (53) in Richtung des Strömungspfads (57) vor einer ersten der Durchflussöffnungen (56) angeordnet ist und ein zweiter der zwei Stopfen (53) in Richtung des Strömungspfads (57) nach einer zweiten der Durchflussöffnungen (56) angeordnet ist.

2. Ventil (1; 28; 36; 51) nach Anspruch 1, **dadurch gekennzeichnet, dass** der Kern (15), an dem dem Anker (14; 37) zugewandten Ende einen Konus aufweist, wobei durch Veränderung einer Steigung des Konus der Kraftverlauf der Kraft in Abhängigkeit des Abstandes zwischen Anker (14; 37) und dem Kern (16) veränderbar ist, mit welcher der Anker (14; 37) den zumindest einen Verschluss (9; 30; 47; 53) von der zweiten Stellung in die erste Stellung und/oder von der ersten Stellung in die zweite Stellung verlagert.

3. Ventil (1; 51) nach Anspruch 1 oder 2, **dadurch gekennzeichnet, dass** der zumindest eine Zufluss (11; 40) dem zumindest einen Abfluss (12; 29; 41) im Wesentlichen gegenüberliegt.

4. Ventil (1; 28; 36; 51) nach einem der vorherigen Ansprüche, **dadurch gekennzeichnet, dass** das Ventil (1; 28; 36; 51) zumindest eine Feder (23; 49) aufweist, welche an dem Kern (16) abstützend den zumindest einen Verschluss (9; 30; 47; 53) mit einer Federkraft in die erste Stellung vorspannt, wobei der Anker (14; 37) bei an die Spule angelegtem Strom den zumindest einen Verschluss (9; 30; 47; 53) entgegen der Federkraft von der ersten Stellung in Richtung der zweiten Stellung drückt.

5. Ventil (1; 28; 36; 51) nach einem der vorherigen Ansprüche, **dadurch gekennzeichnet, dass** der zumindest eine Verschluss (9; 30; 47; 53) durch eine Achse (8; 46) gehalten ist, welche in dem Gehäuse (2; 38; 52) und im Kern (16) gelagert ist und mit dem Anker (14; 37) fest verbunden ist.

6. Ventil (1; 28; 36; 51) nach einem der vorherigen Ansprüche, **dadurch gekennzeichnet, dass** durch eine Geometrie der zumindest einen Durchflussöffnung (25; 33; 43; 56) in Abhängigkeit von der Geometrie des zumindest einen Verschlusses (9; 30; 47; 53) eine Durchflussmenge durch die zumindest eine Durchflussöffnung (25; 33; 43; 56) und eine Betätigungskraft veränderbar ist, welche aufgewendet werden muss um den Verschluss (9; 30; 47; 53) von der zweiten Stellung in die erste Stellung und/oder von der ersten Stellung in die zweite Stellung zu verlagern.

7. Ventil (1; 28; 36; 51) nach einem der vorherigen Ansprüche, **dadurch gekennzeichnet, dass** der zumindest eine Verschluss (9; 30; 47; 53) durch den Anker (14; 37) in Abhängigkeit von dem an die Spule (13) angelegten Strom in eine Zwischenstellung verlagerbar ist, wodurch ein Durchfluss durch die zumindest eine Durchflussöffnung (25; 43; 56) regelbar ist.

8. Ventil (28) nach einem der vorherigen Ansprüche, **dadurch gekennzeichnet, dass** das Ventil (28) zwei an den Hohlraum (10) anschließende Abflüsse (12; 29) aufweist und dass an einer jeweiligen Mündung der Abflüsse (12; 29) in den Hohlraum (10) jeweils eine Durchflussöffnung (25, 33) ausgebildet ist, wobei der zumindest eine Verschluss (30) in der ersten Stellung einen ersten Abfluss (12) der Abflüsse (12; 29) freigibt und einen zweiten Abfluss (29) der Abflüsse (12; 29) verschließt, wodurch sich ein Strömungspfad (34) vom zumindest einen Zufluss (11) über den Hohlraum (10) zum ersten Abfluss (12) einstellt, und wobei der zumindest eine Verschluss (30) in der zweiten Stellung den ersten Abfluss (12) verschließt und den zweiten Abfluss (29) freigibt, wodurch sich ein Strömungspfad (35) vom zumindest einen Zufluss (11) über den Hohlraum (10) zum zweiten Abfluss (29) einstellt.

9. Ventil (28) nach Anspruch 7 und 8, **dadurch gekennzeichnet, dass** bei in der Zwischenstellung befindlichem zumindest einen Verschluss (30) durch eine entsprechende Gestaltung des Verschlusses (30) in Bezug auf Durchflussöffnungen (25;33) die Aufteilung des Durchflusses auf die Durchflussöffnungen (25; 33) eingestellt werden kann.

10. Ventil (28) nach einem der vorherigen Ansprüche, **dadurch gekennzeichnet, dass** an dem zumindest einen Verschluss ein Permanentmagnet und in dem Hohlraum ein Magnetfeldsensor ausgebildet ist, der eine Position des zumindest einen Verschlusses erfasst.

11. Ventil (28) nach einem der vorherigen Ansprüche, **dadurch gekennzeichnet, dass** die Betätigungseinheit (7) einen Flansch (19) umfasst.

## Claims

1. A valve (1; 28; 36; 51) for controlling a fluid comprising
a housing (2; 38; 52) comprising a cavity (10; 39; 54) having at least one flow opening (25; 33; 43; 56), with at least one inflow (11; 40) and at least one outflow (12; 29; 41) connected to said cavity,
at least one closure (9; 30; 47; 53) which is displaceable between a first position and a second position, wherein, in the first position, a flow path (26; 34, 35; 50; 57) appears from the at least one inflow (11; 40) across the at least one flow opening (25; 33; 43; 56) through the cavity (10; 39; 54) to the at least one outflow (12; 29; 41) and wherein, in the second position, the at least one closure (9; 30; 47; 53) closes the at least one flow opening (25; 33; 43; 56), whereby the flow path (26; 34, 35; 50; 57) is interrupted, and
an actuating unit (7) comprising a coil (13), a coil housing (3), a core (16) at least partially enclosed by the coil and an anchor (14; 37), which anchor (14; 37) is coupled to the at least one closure (9; 30; 47; 53) and is arranged in the cavity (10; 39; 54) on the face side relative to the core (16), wherein fluid flowing through the cavity (10; 39; 54) flows around the anchor (14; 37) and wherein the anchor (14; 37) shifts the at least one closure (9; 30; 47; 53) between the first position and the second position, depending on a current applied to the coil (13),
wherein the coil (13) is arranged outside of the cavity (10; 39; 54) and is attached to the housing (2; 38; 52) while being statically sealed against the cavity (10; 39; 54) and wherein the anchor (14; 37) is designed essentially in the shape of a disc, wherein the anchor (14; 37) has an annular elevation (6) on a side facing the core (16), with an inner lateral surface (24) of the elevation (6) and/or an outer lateral surface of the anchor (14; 37) being designed in the shape of a cone, wherein a force acting on the anchor (14; 37) is alterable via a current applied to the coil (13), by means of which force the anchor (14; 37) shifts the at least one closure (9; 30; 47; 53) from the second position into the first position and/or from the first position into the second position, wherein a force path of the force can be influenced as a function of a distance between the anchor (14; 37) and the core (16) via a slope of the cone(s), with the at least one closure (47; 53) being formed by at least one plug, wherein the anchor (37) shifts the at least one closure (47; 53) between the first position and the second position essentially in the direction of or, respectively, against the flow path (50; 57), depending on the current applied to the coil (13), **characterized in that** the valve (51) comprises two plugs (53) and flow openings (56) associated to them, wherein the plugs (53) are kept apart from each other by an axle (46), which is mounted displaceably in the housing (52) and is firmly connected to the anchor (37) at one of its ends, with a first one of the two plugs (53) being arranged in the direction of the flow path (57) upstream of a first one of the flow openings (56) and a second one of the two plugs (53) being arranged in the direction of the flow path (57) downstream of a second one of the flow openings (56).

2. A valve (1; 28; 36; 51) according to claim 1, **characterized in that** the core (15) has a cone at the end facing the anchor (14; 37), wherein the force path of the force is alterable as a function of the distance between the anchor (14; 37) and the core (16) by changing a slope of the cone, by means of which force the anchor (14; 37) shifts the at least one closure (9; 30; 47; 53) from the second position into the first position and/or from the first position into the second position.

3. A valve (1; 51) according to claim 1 or 2, **characterized in that** the at least one inflow (11; 40) is located essentially opposite to the at least one outflow (12; 29; 41).

4. A valve (1; 28; 36; 51) according to any of the preceding claims, **characterized in that** the valve (1; 28; 36; 51) comprises at least one spring (23; 49) which prestresses the at least one closure (9; 30; 47; 53) with a spring force into the first position, while being supported on the core (16), wherein the anchor (14; 37) presses the at least one closure (9; 30; 47; 53) against the spring force from the first position toward the second position, with a current applied to the coil.

5. A valve (1; 28; 36; 51) according to any of the preceding claims, **characterized in that** the at least one closure (9; 30; 47; 53) is held by an axle (8; 46), which is mounted in the housing (2; 38; 52) and in the core (16) and is firmly connected to the anchor (14; 37).

6. A valve (1; 28; 36; 51) according to any of the preceding claims, **characterized in that**, due to a geometry of the at least one flow opening (25; 33; 43; 56), a flow rate through the at least one flow opening (25; 33; 43; 56) and an actuating force are alterable as a function of the geometry of the at least one closure (9; 30; 47; 53), which actuating force must be exerted in order to shift the closure (9; 30; 47; 53) from the second position into the first position and/or from the first position into the second position.

7. A valve (1; 28; 36; 51) according to any of the preceding claims, **characterized in that** the at least one closure (9; 30; 47; 53) is displaceable into an intermediate position by the anchor (14; 37) depending on the current applied to the coil (13), whereby a flow through the at least one flow opening (25; 43; 56) is controllable.

8. A valve (28) according to any of the preceding claims, **characterized in that** the valve (28) has two outflows (12; 29) connected to the cavity (10) and that one flow opening (25, 33) is, in each case, formed on a respective orifice of the outflows (12; 29) into the cavity (10), wherein, in the first position, the at least one closure (30) releases a first outflow (12) of the outflows (12; 29) and closes a second outflow (29) of the outflows (12; 29), whereby a flow path (34) appears from the at least one inflow (11) across the cavity (10) to the first outflow (12) and wherein, in the second position, the at least one closure (30) closes the first outflow (12) and releases the second outflow (29), whereby a flow path (35) appears from the at least one inflow (11) across the cavity (10) to the second outflow (29).

9. A valve (28) according to claim 7 and 8, **characterized in that** the distribution of the flow among the flow openings (25; 33) can be adjusted by an appropriate design of the closure (30) with respect to the flow openings (25; 33), with the at least one closure (30) being in the intermediate position.

10. A valve (28) according to any of the preceding claims, **characterized in that** a permanent magnet is formed on the at least one closure and a magnetic field sensor detecting a position of the at least one closure is formed in the cavity.

11. A valve (28) according to any of the preceding claims, **characterized in that** the actuating unit (7) comprises a flange (19).

## Revendications

1. Vanne (1 ; 28 ; 36 ; 51) destinée au réglage d'un fluide, comportant un boîtier (2 ; 38 ; 52) avec une cavité (10 ; 39 ; 54) présentant au moins une ouverture d'écoulement (25 ; 33 ; 43 ; 56), à laquelle au moins un afflux (11 ; 40) et au moins une évacuation (12 ; 29 ; 41) se raccordent,
au moins un obturateur (9 ; 30 ; 47 ; 53) qui peut se déplacer entre une première position et une seconde position dans laquelle, dans la première position, un chemin d'écoulement (26 ; 34, 35 ; 50 ; 57) s'ajuste depuis au moins un afflux (11 ; 40) via l'au moins une ouverture d'écoulement (25 ; 33 ; 43 ; 56) à travers la cavité (10 ; 39 ; 54) jusqu'à au moins une évacuation (12 ; 29 ; 41) et dans laquelle, dans la seconde position, l'au moins un obturateur (9 ; 30 ; 47 ; 53) obture l'au moins une ouverture d'écoulement (25 ; 33 ; 43 ; 56), ce qui permet d'interrompre le chemin d'écoulement (26 ; 34, 35 ; 50 ; 57), et
une unité d'actionnement (7) qui présente une bobine (13), un boîtier de bobine (3), un noyau (16) au moins partiellement entouré par la bobine et un induit (14 ; 37), lequel induit (14 ; 37) est couplé avec l'au moins un obturateur (9 ; 30 ; 47 ; 53) et est disposé dans la cavité (10 ; 39 ; 54) côté frontal par rapport au noyau (16), dans laquelle le fluide s'écoulant à travers la cavité (10 ; 39 ; 54) circule autour de l'induit (14 ; 37) et dans laquelle l'induit (14 ; 37) déplace au moins un obturateur (9 ; 30 ; 47 ; 53) entre la première position et la seconde position en fonction d'un courant appliqué sur la bobine (13),
dans laquelle la bobine (13) est disposée à l'extérieur de la cavité (10 ; 39 ; 54) et se raccorde au boîtier (2 ; 38 ; 52) de manière étanche statiquement par rapport à la cavité (10 ; 39 ; 54) et dans laquelle l'induit (14 ; 37) est réalisé sensiblement en forme de disque, l'induit (14 ; 37) présentant une saillie annulaire (6) sur une face en regard du noyau (16),
dans laquelle une surface de revêtement intérieure (24) de la saillie (6) et/ou une surface de revêtement extérieure de l'induit (14 ; 37) est réalisée en forme de cône, dans laquelle, par le biais d'un courant appliqué sur la bobine (13), il est possible de modifier une force sur l'induit (14 ; 37) avec laquelle l'induit (14 ; 37) déplace l'au moins un obturateur (9 ; 30 ; 47 ; 53) de la seconde position dans la première position et/ou de la première position dans la seconde position,
dans laquelle un tracé de la force peut être influencé par une pente du(des) cône(s) en fonction d'une distance entre l'induit (14 ; 37) et le noyau (16),
dans laquelle l'au moins un obturateur (47 ; 53) est formé par au moins un bouchon, l'induit (37) déplaçant l'au moins un obturateur (47 ; 53) en fonction du courant appliqué sur la bobine (13) entre la première position et la seconde position sensiblement en direction du chemin d'écoulement (50 ; 57) respectivement contre celui-ci,
**caractérisée en ce que** la vanne (51) présente deux bouchons (53) et des ouvertures d'écoulement (56) associées à ceux-ci, dans laquelle les bouchons (53) sont maintenus à distance l'un de l'autre par le biais d'un axe (46) qui est monté de manière mobile dans le boîtier (52) et est solidaire de l'induit (37) à l'une de ses extrémités, dans laquelle le premier des deux bouchons (53) est disposé, dans la direction du chemin d'écoulement (57), en amont d'une première des ouvertures d'écoulement (56) et le second des deux bouchons (53) est disposé, dans la direction du chemin d'écoulement (57), en aval d'une seconde des ouvertures d'écoulement (56).

2. Vanne (1 ; 28 ; 36 ; 51) selon la revendication 1, **caractérisée en ce que** le noyau (15) présente un cône à l'extrémité en regard de l'induit (14 ; 37), dans laquelle, en modifiant une pente du cône, il est possible de modifier le tracé de la force en fonction de la distance entre l'induit (14 ; 37) et le noyau (16) avec laquelle l'induit (14 ; 37) déplace l'au moins un obturateur (9 ; 30 ; 47 ; 53) de la seconde position dans la première position et/ou de la première position dans la seconde position.

3. Vanne (1 ; 51) selon la revendication 1 ou 2, **caractérisée en ce que** l'au moins un afflux (11 ; 40) se trouve sensiblement en face de l'au moins une évacuation (12 ; 29 ; 41).

4. Vanne (1 ; 28 ; 36 ; 51) selon une des revendications précédentes, **caractérisée en ce que** la vanne (1 ; 28 ; 36 ; 51) présente au moins un ressort (23 ; 49) qui précontraint avec une force de ressort dans la première position l'au moins un obturateur (9 ; 30 ; 47 ; 53) s'appuyant sur le noyau (16), dans laquelle l'induit (14 ; 37), lors du courant appliqué sur la bobine, pousse l'au moins un obturateur (9 ; 30 ; 47 ; 53) contre la force de ressort de la première position en direction de la seconde position.

5. Vanne (1 ; 28 ; 36 ; 51) selon une des revendications précédentes, **caractérisée en ce que** l'au moins un obturateur (9 ; 30 ; 47 ; 53) est maintenu par un axe (8 ; 46) qui est monté dans le boîtier (2 ; 38 ; 52) et dans le noyau (16) et est solidaire de l'induit (14 ; 37).

6. Vanne (1 ; 28 ; 36 ; 51) selon une des revendications précédentes, **caractérisée en ce que**, par une géométrie de l'au moins une ouverture d'écoulement (25 ; 33 ; 43 ; 56), il est possible de modifier, en fonction de la géométrie de l'au moins un obturateur (9 ; 30 ; 47 ; 53), un débit d'écoulement à travers l'au moins une ouverture d'écoulement (25 ; 33 ; 43 ; 56) ainsi qu'une force d'actionnement qui doit être appliquée pour déplacer l'obturateur (9 ; 30 ; 47 ; 53) de la seconde position dans la première position et/ou de la première position dans la seconde position.

7. Vanne (1 ; 28 ; 36 ; 51) selon une des revendications précédentes, **caractérisée en ce que** l'au moins un obturateur (9 ; 30 ; 47 ; 53) peut être déplacé par l'induit (14 ; 37) dans une position intermédiaire en fonction du courant appliqué sur la bobine (13), ce qui permet de régler un débit à travers l'au moins une ouverture d'écoulement (25 ; 43 ; 56).

8. Vanne (28) selon une des revendications précédentes, **caractérisée en ce que** la vanne (28) présente deux évacuations (12 ; 29) se raccordant à la cavité (10) et **en ce qu'**au niveau d'une embouchure respective des évacuations (12 ; 29) dans la cavité (10) il est réalisé à chaque fois une ouverture d'écoulement (25, 33) dans laquelle l'au moins un obturateur (30) libère, dans la première position, une première évacuation (12) des évacuations (12 ; 29) et obture une seconde évacuation (29) des évacuations (12 ; 29), ce qui permet d'ajuster un chemin d'écoulement (34) depuis au moins un afflux (11) via la cavité (10) vers la première évacuation (12), et dans laquelle l'au moins un obturateur (30), dans la seconde position, obture la première évacuation (12) et libère la seconde évacuation (29), ce qui permet d'ajuster une chemin d'écoulement (35) depuis au moins un afflux (11) via la cavité (10) vers la seconde évacuation (29).

9. Vanne (28) selon la revendication 7 et 8, **caractérisée en ce que**, lorsqu'au moins un obturateur (30) se trouve dans la position intermédiaire, la répartition du débit sur les ouvertures d'écoulement (25 ; 33) peut être ajustée par une configuration correspondante de l'obturateur (30) par rapport aux ouvertures d'écoulement (25 ; 33).

10. Vanne (28) selon une des revendications précédentes, **caractérisée en ce qu'**un aimant permanent est réalisé au niveau de l'au moins un obturateur et un capteur de champ magnétique est réalisé dans la cavité pour enregistrer une position de l'au moins un obturateur.

11. Vanne (28) selon une des revendications précédentes, **caractérisée en ce que** l'unité d'actionnement (7) comporte une bride (19).
